(19) Europäisches Patentamt
European Patent Office
Office européen des brevets

(11) **EP 2 113 120 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(21) Anmeldenummer: **08716409.1**

(22) Anmeldetag: **10.03.2008**

(51) Int Cl.:
***G06T 7/00*** (2006.01)

(86) Internationale Anmeldenummer:
**PCT/EP2008/001900**

(87) Internationale Veröffentlichungsnummer:
**WO 2008/116557 (02.10.2008 Gazette 2008/40)**

(54) **VORRICHTUNG UND VERFAHREN ZUM ADAPTIEREN EINES MASKENBILDES**

DEVICE AND METHOD FOR ADAPTING A MASK IMAGE

DISPOSITIF ET PROCÉDÉ D'ADAPTATION D'UNE IMAGE MASQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.03.2007 DE 102007014227
12.09.2007 DE 102007043433**

(43) Veröffentlichungstag der Anmeldung:
**04.11.2009 Patentblatt 2009/45**

(73) Patentinhaber: **Fraunhofer-Gesellschaft zur Förderung der angewandten Forschung e.V.
80686 München (DE)**

(72) Erfinder:
• **MÜNZENMAYER, Christian**
**90409 Nürnberg (DE)**
• **SPINNLER, Klaus**
**91056 Erlangen (DE)**
• **KULESCHOW, Andreas**
**90522 Oberasbach (DE)**

(74) Vertreter: **Schenk, Markus et al
Schoppe, Zimmermann, Stöckeler & Zinkler
Patentanwälte
Postfach 246
82043 Pullach bei München (DE)**

(56) Entgegenhaltungen:
**DE-A1- 10 037 697     JP-A- 2004 086 793
US-B1- 6 721 446**

• **ITO M ET AL: "MORPHOLOGICAL OPERATIONS BY LOCALLY VARIABLE STRUCTURING ELEMENTS AND THEIR APPLICATIONS TO REGION EXTRACTION IN ULTRASOUND IMAGES" SYSTEMS & COMPUTERS IN JAPAN, WILEY, HOBOKEN, NJ, US, Bd. 34, Nr. 3, 1. März 2003 (2003-03-01), Seiten 33-43, XP001159586 ISSN: 0882-1666**

**Beschreibung**

Die vorliegende Erfindung bezieht sich auf eine Vorrichtung und auf ein Verfahren, um ein Maskenbild an ein Kamerabild, das als digitales oder binäres Bild vorliegen kann, oder an einen Bereich desselben anzupassen und insbesondere beschreibt die vorliegende Erfindung ein Verfahren zur automatischen Adaption von vordefinierten Prüfbereichen an jeweilige Werkstücke. Damit kann insbesondere eine automatische Sichtprüfung von Oberflächen vorgenommen werden.

In der modernen Fahrzeug- und Maschinenfertigung gewinnt eine automatisierte Sichtprüfung von Bauteilen zunehmend an Bedeutung. Dies trifft insbesondere auf Gussteile zu, die verschieden bearbeitete Oberflächen aufweisen können und für die ein Bedarf nach Kamera-basierten Bildverarbeitungssystemen besteht. Üblicherweise sind in jedem Kamerabild nur ausgewählte Flächen eines Bauteils zu prüfen, wobei die ausgewählten Flächen beispielsweise durch eine Bearbeitung wie Überfräsen aus einem Rohguss entstehen können. Durch verfahrensbedingte Schwankungen in der Herstellung solcher Bauteile unterscheiden sich die ausgewählten Flächen von Bauteil zu Bauteil, was beispielsweise aufgrund eines Verschleißes der Gussform verursacht werden kann. Als besonders problematisch erweisen sich dabei Berandungen der Prüfflächen, die in nicht zu vernachlässigbaren Grenzen variieren können.

Eine vollautomatische Segmentierung ist häufig nur sehr schwer oder gar nicht machbar, da die Oberflächenqualitäten mit unter stark schwanken und dadurch im Kamerabild unterschiedliche Erscheinungsformen der Flächen erzeugt werden. Ein weiteres Hindernis für eine vollautomatische Segmentierung sind die mitunter häufig vorkommenden sehr komplex geformten Flächen. Insbesondere Ränder werden in einer vollautomatischen Segmentierung oft nur unzureichend erfasst und können so genannte Ausfransungen zeigen.

Ein alternatives konventionelles Verfahren besteht darin, einen Prüfbereich zunächst durch eine Maske zu definieren. Diese Maske, die auch als Referenzmaske bezeichnet wird, kann beispielsweise durch einen Fachmann beispielsweise unter Nutzung eines herkömmlichen Graphikprogramms interaktiv erstellt werden. Eine solche durch den Fachmann erzeugte Referenzmaske ist jedoch aufgrund der oben erwähnten Variationen nur mit Einschränkungen verwendbar. Um PseudoFehler insbesondere an Randkonturen zu vermeiden, sollte deshalb immer genügend Abstand zum Rand bzw. zu einer Randkurve eingeräumt werden, in der dann nicht geprüft werden kann. Dieser Rand bzw. diese Randkurve können beispielsweise Konturkurven sein, die Gebiete mit unterschiedlichem Farbton in dem erstellten Kamerabild voneinander trennen.

Ausgehend von diesem Stand der Technik liegt der vorliegenden Erfindung die Aufgabe zugrunde, eine Vorrichtung und ein Verfahren zum Adaptieren eines Maskenbildes an ein Gebiet eines digitalen Bildes zu schaffen, welches eine automatische Bilderfassung des Bildbereichs schnell und zuverlässig erlaubt.

Diese Aufgabe wird durch ein Verfahren nach Anspruch 1 und eine Vorrichtung nach Anspruch 22 gelöst.

Der vorliegenden Erfindung liegt die Erkenntnis zugrunde, dass eine Maske oder ein Maskenbild, das durch eine Randkurve begrenzt wird, an ein Bild mit einer Konturkurve (=Trennlinie zwischen zwei Bereichen oder Gebieten mit unterschiedlichen Farbtönen) dadurch angepasst werden kann, dass die Randkurve durch Flächenelemente verändert wird bzw. die Flächenelemente an die Randkurve angeordnet werden, wobei die Flächenelemente durch eine Extremalwertbestimmung einer Zielfunktion bestimmt werden. Die Flächenelemente liegen in verschiedenen Farbtönen und verschiedenen Größen (Abmaße) vor und in Abhängigkeit von dem jeweiligen Farbton wird das Maskenbild durch ein Verändern der Randkurve entweder vergrößert oder verkleinert. Das Bild kann dabei von einem Kamerabild erzeugt werden und liegt als digitales oder beispielsweise als binäres Bild vor. Ein wichtiger Schritt umfasst dabei die Extremalwertbestimmung, die beispielsweise durch eine Maximierung der Zielfunktion mit dem Ergebnis durchgeführt werden kann, dass die Flächenelemente aus einem Satz von Flächenelementen ausgewählt werden, wobei der Satz Flächenelemente unterschiedlicher Größe und unterschiedlicher Farbtöne aufweist. Die Maximierung kann derart durchgeführt werden, dass entlang der Randkurve zunächst ein Flächenelement an einem Randpunkt dadurch bestimmt wird, dass das dort angeordnete Flächenelement einen Farbton aufweist, der weitestgehend oder maximal mit dem Farbton des digitalen Bildes (Kamerabildes), auf dem das Flächenelement angeordnet ist, übereinstimmt und somit möglichst hohe Korrelation aufweist. In einem Folgeschritt wird dann diese Prozedur für einen Nachbarpunkt des Randpunktes wiederholt.

Bei weiteren Ausführungsbeispielen können weitere Optimierungen durch weitere Maximierungen der Zielfunktion erreicht werden - zum Beispiel derart, dass entlang der Berandungskurve die angeordneten Flächenelemente jeweils eine maximale Größe bei gleichzeitiger maximaler Übereinstimmung des Farbtons mit dem digitalen Bild aufweisen. Ferner ist es möglich, eine Maximierung dahingehend durchzuführen, dass die resultierende Randkurve möglichst glatt ist, so dass Tangenten an die Randkurve (oder die von ihnen eingeschlossenen Winkel) entlang eines Bereiches der Randkurve nur innerhalb eines vorbestimmten Bereiches variieren. Außerdem können Ausführungsbeispiele anstatt der Maximierung der Zielfunktion auch eine Minimierung aufweisen (beispielsweise durch einen Wechsel der Zielfunktion oder durch die Wahl anderer Variablen).

Nach Bestimmung der Flächenelemente werden die Flächenelemente entweder dem Maskenbild hinzugefügt oder vom Maskenbild abgezogen (d.h. das entsprechende Flächenelement wird von der Maske ausgeschnitten) je nachdem, welchen Farbton die Flächenelemente aufweisen. Sofern das digitale Bild als binäres Bild vorliegt und die Konturkurve dementsprechend die Gebiete der beiden Farbtöne trennt, entspricht einer der beiden Farbtöne einem Hinzufügen und der anderen einem Abziehen der Flächenelemente von der Maske.

Bei Ausführungsbeispielen der vorliegenden Erfindung kann somit das digitale Bild zunächst binarisiert (beispielsweise ein Schwarzweißbild erzeugt) werden. Gleichzeitig ist der Satz von Flächenelemente, die auch als Strukturelemente bezeichnet werden, derart zusammengestellt, dass zu jeder Größe jeweils zwei Flächenelemente in den binären Farbkomponenten oder Farbtönen vorkommen. Zum Beispiel enthält der Satz zwei Flächenelemente in einer ersten Größe - eins in dem ersten Farbton und eins in dem zweiten Farbton - und ebenso kommen alle weiteren Flächenelemente einer bestimmten Größe (Flächeninhalt) jeweils in dem ersten und in dem zweiten Farbton vor. Abgesehen von einem Schwarzweißbild können auch andere binäre Farbkombinationen (z. B. Schwarz-Blau oder Schwarz-Grün) bei weiteren Ausführungsbeispielen erzeugt werden.

Ausführungsbeispielen liegt somit das Verfahren zugrunde, bei dem das vordefinierte binäre Maskenbild (beispielsweise durch einen Fachmann per Hand erzeugt) über das binarisierte aktuelle Kamerabild gelegt wird. Danach wird entlang aller Konturen des Maskenbildes eine Korrelation mit einem in der Größe variablen schwarzen und weißen Strukturelement (Flächenelement) gemessen. Das Strukturelement mit der jeweils höchsten Korrelation für einen Punkt der Kontur wird in das Zielbild eingezeichnet und adaptiert so die neue Maske. Die Robustheit des Verfahrens kann gesteigert werden, wenn die Größe benachbarter Strukturelemente (entlang der Kontur) in die gewählte Optimierung (Maximierung der Zielfunktion) mit aufgenommen wird, so dass kontinuierliche Übergänge entstehen.

Im Gegensatz zu konventionellen Standardverfahren der Morphologie, die Erosion und die Dilation nutzen, um beispielsweise Kurven aneinander anzupassen, werden bei Ausführungsbeispiel der vorliegenden Erfindung Strukturelemente nur entlang der Konturen verschoben und nicht auf jedem Bildpunkt des digitalen Bildes angewendet. Ferner wird die Größe der Strukturelemente variiert und eine optimale Größe durch Optimierung (Maximierung der Zielfunktion) ausgewählt. Konventionelle Verfahren nutzen ferner Algorithmen, die zunächst Konturen aus dem aktuellen Bild extrahieren und ein Matching (Anpassen) der extrahierten Konturen an einer Referenzkontur vornehmen. Diese konventionellen Verfahren sind auch als Konturmatching bekannt.

Im Unterschied zu diesen konventionellen Verfahren nutzen Ausführungsbeispiele ein Verfahren, das zwar Referenz-Konturen aus der Referenz-Maske (Maskenbild) gewinnt, diese Referenz-Konturen (Randkurven oder Berandungskurven) werden jedoch nicht an eine jeweils neu zu bestimmende Kontur angepasst, sondern direkt aufgrund der Pixelwerte und der damit bestimmten Korrelation verändert. Somit nutzt das erfindungsgemäße Verfahren zwar die Berandungskurve des Maskenbilds (an die die Strukturelemente angeordnet werden) und es nutzt den Farbwert oder Tonwert (Tonwerttyp) des damit markierten Bereichs im digitalen Bild, es nutzt jedoch nicht die Konturkurve des digitalen Bildes. Eine genaue Kenntnis der Lage oder der Form dieser Konturkurve, die beispielsweise ein erstes Gebiet mit einem ersten Farbton von einem zweiten Gebiet mit einem zweiten Farbton trennt, ist für Ausführungsbeispiele der vorliegenden Erfindung nicht erforderlich.

Unter der Annahme, dass die Bild- und Maskenebene durch die Koordinaten (x,y) parametrisiert werden, gehen Ausführungsbeispiele von folgenden Voraussetzungen aus.

(1) Ein binäres Maskenbild $M(x,y) \in \{0;1\}$ mit Werten 0 oder 1, welches einmalig entsprechend der Abbildung eines Musterteils z. B. händisch mit einem Zeichenprogramm erzeugt wurde.

(2) Ein aktuelles Kamerabild eines zu prüfenden Teils $f(x,y) \in [0;255]$, hier 8-Bit-Bild, kann aber eine beliebige Grauwert-Dynamik (z. B. 10, 12, ... Bit) aufweisen.

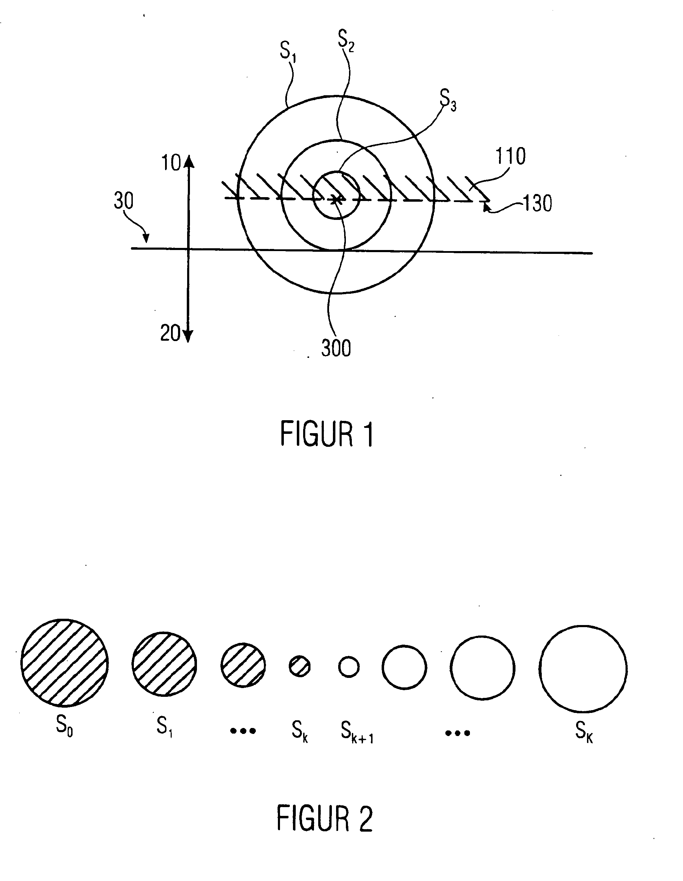

(3) Eine Liste K von Strukturelementen $S_k$ in schwarz und weiß mit $k \in [0;K-1]$ sortiert nach der Größe, vgl. Fig. 2 unten. In einer bevorzugten Ausführung sind dies gefüllte Kreisscheiben. Es können aber auch gefüllte Rechtecke oder Polygone oder andere geometrische Objekte verwendet werden.

Mit diesen Voraussetzungen wird bei Ausführungsbeispielen das aktuelle Kamerabild $f(x,y)$ zunächst binarisiert. Dies kann beispielsweise mittels eines einfachen globalen Schwellenwertverfahrens realisiert werden, wobei das Schwellenwertverfahren beispielsweise hinsichtlich der Helligkeit oder hinsichtlich einer bestimmten Farbkomponente, in der sich die Konturen des Kamerabildes (digitales Bild) deutlich unterscheiden. Es sind jedoch auch komplexere Binarisierungsalgorithmen, wie beispielsweise das Verfahren nach Otsu. Als Ergebnis wird ein binarisiertes Kamerabild $g(x,y) \in \{0;1\}$ mit Werten von 0 oder 1 für jeden Punkt des Kamerabilds erhalten.

Daran anschließend wird aus dem vorgegebenen binären Maskenbild $M(x,y)$ alle Konturen $c_1 = \{(x_i, y_i) \,|\, i = [0; N_1]\}$ mit $N_1$ Punkten $(x_i, y_i)$ extrahiert. Die Diskretisierung der Konturrandpunkte in $N_1$ Punkte kann entsprechend den Gegebenheiten angepasst werden, d.h. der Abstand zwischen zwei benachbarte Randpunkte kann variable oder konstant gewählt sein. Hierbei bezeichnet der Index 1 die jeweilige Kontur (Randkurve des binären Maskenbildes M).

Bei weiteren Verfahrensschritten erfolgt die Korrelationsbestimmung. Das kann beispielsweise durch eine Verarbeitung geschehen, die in einer Schleife über jeden Punkt $(x_i, y_i)$ jeder Kontur $c_i$ geschieht. Dabei werden beispielsweise die Korrelationen $r_{ik}$ der an diesen Punkt (zentrierten) strukturierenden Elemente $S_k$ (Flächenelemente) mit dem aktuellen Binärbild $g(x,y)$ bestimmt. Diese Korrelation entspricht beispielsweise einem Anteil übereinstimmender Pixel (z.B. weißer und schwarzer) in dem Bereich des Binärbildes $g(x,y)$, der durch das auf den Konturpunkt $(x_i, y_i)$ (zentriert) angeordnete strukturierende Element $S_k$ überdeckt wird.

In einer Kurzbeschreibung unter Verwendung einer Pseudocode-Notation kann dies wie folgt ausgedrückt werden:

```
Für jede Kontur c_l mit l = 0 ... L − 1    {

    Für jeden Konturpunkt (x_i, y_i) mit i = 0...N_l − 1 {

        Für jedes S_k mit k = 0... K − 1     {

            Berechne r_{i,k}    (Korrelation S_k mit g(x, y))
        }
    }
}
```

Nach der Bestimmung der Korrelation kann eine Optimierung erfolgen. Ein einfaches Verfahren könnte darin bestehen, eine optimale Korrelation für jeden Konturpunkt $(x_i, y_i)$ separat zu bestimmen und das entsprechende Strukturelement $S_k$ in das Zielmaskenbild $M(x,y)$ einzuzeichnen. Da bei dieser (separaten) Verfahrensweise benachbarte Strukturelemente unberücksichtigt bleiben, kann dies zu diskontinuierlichen Übergängen (stark schwankende Größen benachbarter Strukturelemente) führen. Um dies zu vermeiden, kann beispielsweise eine Zielfunktion verwendet werden, deren Maximierung der Optimierung entspricht. Die Zielfunktion wird dabei vorzugsweise derart gewählt, dass kontinuierliche Übergänge und gleichzeitig eine möglichst gute Anpassung an das aktuelle Kamerabild erreicht wird. Zum Beispiel kann eine separierbare, additive Zielfunktion der folgenden Form gewählt werden:

$$w_{i,k} = \alpha r_{i,k} + \beta \frac{D_k}{D_{max}} + \max_l\left\{\gamma \frac{D_{max} - |D_k - D_l|}{D_{max}} + w_{i-l,l}\right\} \,, \qquad (1)$$
$$= w^{(1)} + w^{(2)} + w^{(3)}$$

wobei der Index "i" sich auf die (diskrete) Position des Randpunktes und der Index "k" sich auf das gewählte Strukturelement $S_k$ mit dem Durchmesser $D_k$ (für Kreise, ansonsten kann $D_k$ auch den Flächeninhalt bezeichnen) bezieht und $\max_1$ eine Maximierung hinsichtlich benachbarter Strukturelement $S_1$ bedeutet. Die Zielfunktion $w_{i,k}$ weist die folgenden drei Terme $w^{(1)}, w^{(2)}, w^{(3)}$ auf:

- $r_{ik}$ Korrelation mit aktuellem Bild

- $\dfrac{D_k}{D_{max}}$ Relative Größe des Strukturelements

- $\dfrac{D_{max} - |D_k - D_l|}{D_{max}}$ Glattheitsterm hinsichtlich benachbarter Strukturelemente.

Alternativ kann auch $\dfrac{D_{max}}{|D_k - D_l| + 1}$ als Glattheitsterm verwendet werden.

Die Maximierung dieser Zielfunktion $w_{i,k}$ kann beispielsweise derart erfolgen, dass zu jeder Position "i" eine Maximierung hinsichtlich der Strukturelement $S_k$ (oder hinsichtlich des Index "k") durch geführt wird. Die drei Terme entsprechen den oben bereits erwähnten drei unterschiedlichen Optimierungszielen. Der erste Term maximiert die Korrelation, d.h. die farbliche Übereinstimmung und kann ein Wert zwischen 0% und 100% aufweisen, wobei eine 100%-tige Übereinstimmung insbesondere für die größeren Strukturelementen im Allgemeinen nicht erreicht werden wird. Dies wäre nur dann möglich, wenn sich der Berandungskurve entsprechen weit von der Konturkurve in dem ursprünglichen Kamerabild (oder Binärbild g(x,y)) entfernt haben sollte. Der zweite Term bewirkt eine Optimierung der Größe und belohnt insbesondere große Strukturelemente. Dadurch wird erreicht, dass die Berandungskurve der Zielmaske möglichst sich möglichst weit der Konturkurve im Binärbild angenähert hat. Schließlich belohnt der dritte Term eine möglichst glatte Randkurve der Zielmaske, was dem entspricht, dass Tangenten der Randkurve an benachbarten Randpunkten sich unter einem möglichst kleinen Winkel schneiden. Dies kann beispielsweise dadurch erreicht werden kann, dass sich benachbarte Strukturelemente kaum unterscheiden (dann wird dieser Term maximal).

Wichtig dabei ist, dass der Wert der Zielfunktion iterativ basierend auf dem Maximum der Vorgängerwerte für die verschiedenen Radien berechnet wird, wobei der Glattheitsterm mit den Differenzen $|D_k - D_l|$ für glatte Übergänge sorgt. Im wesentlich beruht das Verfahren hier auch somit ein Wiederverwerten von Teilergebnissen, die in einem vorausgehenden Optimierungsschritt bereits bestimmt wurden. Aufgrund der Separierbarkeit kann die Bestimmung einer optimalen Folge von Strukturelementen entlang der Berandungskurve des Maskenbildes durch eine Maximierung der Zielfunktion $w_{i,k}$ beispielsweise unter Nutzung konventioneller Optimierungsverfahren (z. B. dynamischer Programmierung) erfolgen. Bei Ausführungsbeispielen kann ein Verfahren verwendet werden, welches die Gewichte oder Koeffizienten $\alpha$, $\beta$, $\gamma$ zwischen den drei Termen derart wählt, dass eine möglichst optimale Anpassung des Maskenbildes an das aktuelle Binärbild g(x,y) geschieht. Diese optimale Anpassung kann beispielsweise durch eine visuelle Untersuchung erfolgen. Weiterhin sind Varianten denkbar, wo ein Größenunterschied aufeinander folgender Strukturelemente durch einen Schwellwert begrenzt wird. Somit ist eine Beschleunigung des Verfahrens möglich.

Abschließend erfolgt eine Adaption des Maskenbildes bzw. eine Erstellung einer Zielmaske. Dazu wird zunächst das adaptierte Maskenbild $\hat{M}(x,y) \in \{0;1\}$ mit dem Originalmaskenbild initialisiert $\hat{M}(x,y) \leftarrow M(x,y)$. Als Resultat der Optimierung (z.B. in der beschriebenen Schrittfolge), ist für jeden Kontur- bzw. Randpunkt $(x_i, y_i)$ ein optimales Strukturelement $S_{k(i)}$ bekannt, wobei der Index k(i) einem optimalen "k"-Wert für das Strukturelement entspricht. Das optimale Strukturelement $S_{k(i)}$ wird in das Zielmaskenbild $\hat{M}$ eingezeichnet. Dieses Einzeichnen kann in Abhängigkeit von der Farbe entweder ein Hinzufügen oder ein Abziehen einer Region von dem Maskenbild bedeuten, wobei die Region durch das optimierte Strukturelement $S_{k(i)}$ gekennzeichnet Gebiet ist. Ein Beispiel kann dabei unter Verwendung der Pseudocode-Mutation wie folgt dargestellt werden:

```
Für jede Kontur c₁ mit l = 0...L − 1    {

    Für jeden Konturpunkt (xᵢ,yᵢ) mit i=0,...,N₁ −1 {

        Wenn IstSchwarz(S_{k(i)})    {

            M̂(x, y) ← M̂(x, y) ∧ S_{k(i)}    // Und-Verknüpfung

        }
    Sonst    {
```

$$\hat{M}(x, y) \leftarrow \hat{M}(x, y) \vee S_{k(i)} \qquad \text{// Oder-Verknüpfung}$$

```
        }
            }
                }
```

Als Ergebnis dieser Operation wird ein an das aktuelle Kamerabild adaptiertes Maskenbild $\hat{M}(x,y)$ erhalten.

Bei weiteren Ausführungsbeispielen kann optional eine abschließende weitere Bearbeitung vorgenommen werden. Beispielsweise können in stark gekrümmten Konturbereichen Überlappungen der Maske mit der Berandung dadurch vermieden werden, dass eine anschließende mehrfache Erosion der Binärmaske angeschlossen wird. Die Maske wird dabei gleichmäßig verkleinert, so dass ein Sicherheitsabstand zur Konturkurve oder zum Flächenrand des Binärbildes g(x,y) erreicht werden kann. Als weitere optionale Variante kann die Erosion auch nur auf ausgewählte Konturen der Referenzmaske durchgeführt werden. Alternativ zur Erosion oder zur teilweisen Erosion von bestimmten Gebieten kann ebenfalls eine Vergrößerung oder Dilatation vorgenommen werden, um die Maske oder das Maskenbild entsprechend gleichmäßig zu vergrößern.

Ausführungsbeispiele der vorliegenden Erfindung weisen somit folgende Vorteile gegenüber herkömmlichen Verfahren auf. Erstens ist die Robustheit gegenüber Schwankungen in der Kontur der zu prüfenden Fläche verbessert worden. Ferner können Pseudofehler vermieden werden, die beispielsweise dann entstehen, wenn die ursprüngliche Maske über den Rand der Fläche hinausgeht. Da der Sicherheitsabstand zu der Flächengrenze beliebig einstellbar ist und insbesondere kleiner gewählt werden kann, ist es damit möglich, einen größeren prüfbaren Bereich zu erhalten. Schließlich kann im Vergleich zu einer vollautomatischen konventionellen Segmentierung die zu prüfende Fläche besser eingegrenzt werden. Dies kann beispielsweise dadurch geschehen, dass irrelevante Bereiche ausgelassen werden.

Ausführungsbeispiele der vorliegenden Erfindung werden nachfolgend Bezug nehmend auf die beiliegenden Zeichnungen näher erläutert. Es zeigen:

Fig. 1 eine schematische Darstellung eines Binärbildes mit zwei Bereichen und einer Serie von Flächenelementen;

Fig. 2 eine schematische Darstellung von verfügbaren Flächenelementen unterschiedlicher Größe und in je zwei Binärfarben;

Fig. 3A-D eine schematische Darstellung einer Erzeugung einer Zielmaske durch Ausschneiden oder Hinzufügen der Flächenelemente;

Fig. 4A,B eine Darstellung einer Abhängigkeit einer Zielfunktion $w^{(1)}$ von Flächenelementen verschiedener Größe;

Fig. 5 Berechnung einer Korrelation $r_{ik}$;

Fig. 6 eine Serie von optimierten Flächenelementen, die an die Berandungskurve des Maskenbildes angeordnet sind;

Fig. 7A,B eine Darstellung eines Prüfbereichs, der mittels einer Maske definiert ist und ein entsprechender vergrößerter Ausschnitt;

Fig. 8A,b eine weitere Darstellung des Prüfbereichs wie in den Fig. 7A, B, jedoch mit entsprechend gewähltem Sicherheitsabstand des Maskenrandes zur Konturkurve des Bildes; und

Fig. 9 eine Darstellung von weiteren möglichen Flächenelementen in Form von Vierecken und Ellipsen.

Bezüglich der nachfolgenden Beschreibung sollte beachtet werden, dass bei den unterschiedlichen Ausführungsbeispielen gleiche oder gleich wirkende Funktionselemente gleiche Bezugzeichen aufweisen und somit die Beschreibung dieser Funktionselemente in den verschiedenen der nachfolgend dargestellten Ausführungsbeispielen untereinander austauschbar sind.

Fig. 1 zeigt eine schematische Darstellung eines Ausschnitts eines Maskenbilds, das auf ein Kamerabild oder digitales Bild angeordnet ist. Das Maskenbild weist ein Maskengebiet 110 auf, welches beispielsweise ein Teil des digitalen Bildes verdeckt und eine Berandungskurve 130 aufweist. Die Berandungskurve 130 markiert dabei jenen Teil des digitalen Bildes, der nicht von der Maske abgedeckt (maskiert) wird. Das digitale Bild weist ein erstes Gebiet 10 und ein zweites Gebiet 20 auf, die durch eine Konturkurve 30 voneinander getrennt sind. Das erste Gebiet 10 ist gekennzeichnet durch einen ersten Farbton (Tonwert oder Tonwerttyp) und das zweite Gebiet 20 durch einen zweiten Tonwert (Tonwerttyp). Die Tonwerte können beispielsweise auch bestimmten Farben entsprechen. Im einfachsten Fall kann das erste Gebiet 10 beispielsweise Schwarz und das zweite Gebiet 20 beispielsweise Weiß (oder umgekehrt) sein.

Die Berandungskurve 130 weist einen Randpunkt 300 auf, um den Flächenelemente verschiedener Größen angeordnet sind, z. B., wie in Fig. 1 zu sehen, ein erster Kreis $S_1$, ein zweiter Kreis $S_2$ und ein dritter Kreis $S_3$, wobei der erste Kreis $S_1$ den größten Radius und der dritte Kreis $S_3$ den kleinsten Radius aufweist. Der zweite Kreis $S_2$ ist dabei derart gewählt, dass der Radius des zweiten Kreises $S_2$ dem Abstand der Berandungskurve 130 von der Konturkurve 30 entspricht, so dass der zweite Kreis $S_2$ die Konturkurve 30 berührt.

Das digitale Bild (in der Fig. 1 nicht gezeigt) kann beispielsweise verschiedene Farbkomponenten oder Tonwerte aufweisen oder im einfachsten Fall binär sein bzw. zu einem binären Bild konvertiert worden sein. Ein Beispiel für den letzteren Fall ist ein Schwarzweißbild, welches von einem Farbbild beispielsweise durch ein Schwellwertverfahren problemlos erzeugbar ist. Die Konturkurve 30 entspricht in einem solchen Fall einer Grenzlinie zwischen einem schwarzen und einem weißen Bereich (erstem Bereich 10 und zweitem Bereich 20). Der erste Bereich 10 und der zweite Bereich 20 können aber ebenfalls einen in einer bestimmten Farbe erscheinenden Bereich eines Farbbilds entsprechen, wobei die Konturlinie 30 einen Übergangsbereich markiert. Entsprechend den Tonwerten des ersten Bereichs 10 und des zweiten Bereichs 20 weisen ebenfalls die Flächenelemente $S_a$ beispielsweise zwei Tonwerte auf, die den Tonwerten des ersten Gebiets 10 und des zweiten Gebiets 20 entsprechen.

Fig. 2 zeigt eine Folge von Flächenelementen oder Strukturelementen $S_a$ (a= 0, 1, 2, ... , K), wobei jede Größe in jeweils zwei Tonwerten vorhanden ist. Die Strukturelemente $S_a$ sind in Fig. 2 der Größe nach sortiert, so dass das größte Strukturelement $S_0$ in dem ersten Tonwert (z. B. Schwarz) links gezeigt ist und nach rechts anschließend die Strukturelemente $S_1$, $S_2$ usw. bis $S_k$ gezeigt sind, die ebenfalls den ersten Tonwert (z. B. Schwarz) aufweisen und das kleinste Strukturelement $S_k$ die kleinste Fläche aufweist. Daran anschließend sind die Strukturelemente in dem zweiten Farbton (z. B. Weiß) gezeigt, wobei nach rechts fortlaufend Strukturelemente mit größer werdender Fläche gezeigt sind, so dass das kleinste Strukturelement in dem zweiten Farbton $S_{k+1}$ als erstes Strukturelement in der Folge vorkommt und das letzte Strukturelement in der Folge ist das (z.B. weiße) Strukturelemente $S_k$ mit der größten Fläche.

Die Farben der Strukturelemente können dabei bestimmten Farben oder aber dem ersten und zweiten Tonwert des ersten Gebiets 10 und des zweiten Gebiets 20 des digitalen Bildes angepasst werden. Im einfachsten Fall ist es wie gesagt eine einfache Schwarzweiß-Farbkombination.

Fig. 2 zeigt eine vordefinierte Liste von Strukturelementen $S_a$, die auch als strukturierende Elemente bezeichnet werden können und beispielsweise mit schwarzen Scheiben kleiner werdender Größe beginnen und ebenfalls weiße Scheiben steigender Größe umfassen können. Optional können allerdings auch andere strukturierende Elemente, wie z. B. Rechtecke oder auch Ellipsen (siehe weiter unten) verwendet werden.

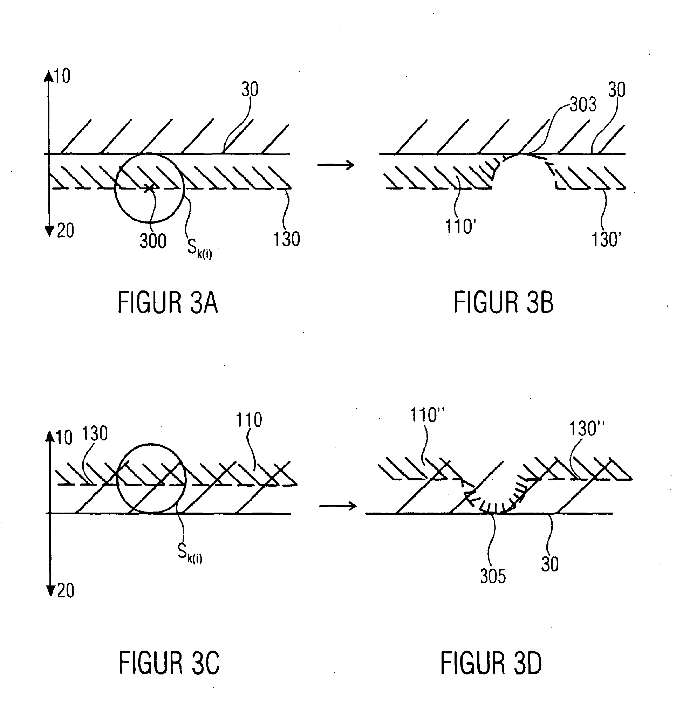

Fig. 3 zeigt eine Adaption der Maske oder des Maskenbereichs 110 durch ein Hinzufügen oder ein Weglassen des von einem optimalen Strukturelement $S_{k(i)}$ eingenommenen Bereichs.

Die Fig. 3A zeigt das digitale Bild mit der Konturkurve 30, die das erste Gebiet 10 von dem zweiten Gebiet 20 trennt. Ferner ist ein Maskengebiet 110 gezeigt mit einer Berandungskurve 130, wobei an dem Randpunkt 300 ein optimales Strukturelement $S_{k(i)}$ angeordnet ist. Das optimale Strukturelement $S_{k(i)}$ ist dabei derart gewählt, dass deren Fläche möglichst groß ist, ohne das erste Gebiet 10 des digitalen Bildes zu überdecken bzw. teilweise zu überdecken. Fig. 3B zeigt, dass das modifizierte Maskenbild 110' dadurch gebildet wird, dass zu dem Maskenbild 110 die Fläche des optimalen Strukturelemente $S_{k(i)}$ hinzugefügt wird. Damit ergibt sich für das modifizierte Maskenbild eine modifizierte Randkurve 130', die die Konturkurve 30 in einem Kontaktpunkt 303 berührt bzw. diesem nahe kommt (im Sinne einer Optimierung möglichst nahe kommt). Die Fig. 3A und 3B zeigen somit, dass das modifizierte Maskenbild 110' durch ein Hinzufügen des optimierten Strukturelementes $S_{k(i)}$ - oder besser des durch das optimierte Strukturelement $S_{k(i)}$ markierte Gebiet - erhalten wird.

Die Fig. 3C und 3D zeigen eine zu den Fig. 3A und 3B komplementäre Situation, bei der die Berandungskurve 130 in dem ersten Gebiet 10 verläuft und folglich wird die Optimierung mit dem Ziel verfolgt, das Maskenbild 110 entsprechend zu verkleinern, damit sich die Berandungskurve 130 der Konturkurve 30 annähert. Dies kann dadurch geschehen, dass das optimierte Strukturelement $S_{k(i)}$, welches wiederum durch ein Optimierungsverfahren (Extremierung der Zielfunktion) erhalten werden kann und eine maximale Fläche aufweist ohne einen Teil des zweiten Gebiets 20 zu überdecken, von dem Maskenbild 110 entfernt oder ausgeschnitten wird. Als Resultat wird das in Fig. 3D gezeigte weitere modifizierte Maskenbild 110 " erhalten, welches durch eine weitere modifizierte Randkurve 130" berandet ist, die die Konturkurve 30 in dem Kontaktpunkt 305 berührt bzw. nahe kommt.

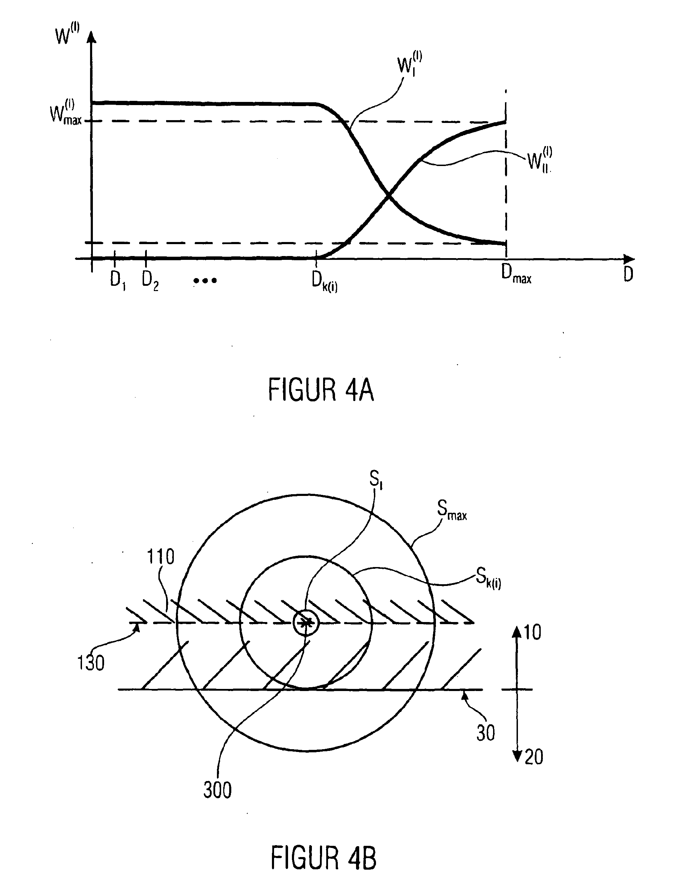

Die Fig. 4A und 4B veranschaulichen das Optimierungsverfahren zur Ermittlung des optimalen Flächenele-mentes $S_{k(i)}$ unter Nutzung einer Zielfunktion w. Für das Ausführungsbeispiel, dass Strukturelemente in zwei Farben zu jeder Größe vorkommen, hängt die Zielfunktion w im Allgemeinen sowohl von Strukturelementen in der einen Farbe als auch von den Strukturelementen in der anderen Farbe ab. Diese Abhängigkeiten können auch separat betrachtet werden.

Fig. 4A zeigt eine mögliche Zielfunktion, wobei der Graph $w_I^{(1)}$ sich auf die Abhängigkeit von der Größe von Strukturelemente in der ersten Farbe und der Graph $w_{II}^{(1)}$ die Abhängigkeit von der Größe von Strukturelemente in der zweiten Farbe beschreibt. Die Graphen $w_I^{(1)}$ und $w_{II}^{(1)}$ beziehen sich hier auf den Korrelationsterm aus Glg. (1). Somit wird eine Doppelung von Variablen D (Durchmesser der Kreise) hinsichtlich der beiden auftretenden Farbe vermieden. Beispielsweise kann sich $w_I^{(1)}$ auf den Tonwert des ersten Gebiets 10 und der zweite Graph $w_{II}^{(1)}$ auf den zweiten Tonwert des zweiten Gebiets 20 beziehen. Somit kann mittels $w_I^{(1)}$ eine Optimierung bzw. Maximierung der Flächenelemente $S_a$ bezüglich des ersten Tonwerts oder der ersten Farbe und mittels $w_{II}^{(1)}$ die Optimierung der Flächenelemente $S_a$ in dem zweiten Tonwert erreicht werden. Die Flächenelemente sind der Einfachheit halber als Kreise angenommen, die einen Radius D aufweisen, wobei das erste Flächenelement einen ersten Radius $D_1$, das zweite Flächenelement einen zweiten Radius $D_2$, ... und das größte Flächenelement einen maximalen Durchmesser $D_{max}$ aufweisen.

Um die Optimierung besser zu veranschaulichen, ist in Fig. 4B eine konkrete Situation gezeigt, bei der die Berandungskurve 130 sich in dem ersten Gebiet 10 befindet, wobei beispielhaft angenommen werden kann, dass der Tonwert des ersten Gebiets 10 Schwarz sei und der Tonwert des zweiten Gebiets 20 Weiß sei und das Maskengebiet 110 ebenfalls mit Schwarz gekennzeichnet sei. Das optimale Flächenelement $S_{k(i)}$, das an dem Randpunkt 300 angeordnet wird, kann nun in der folgenden Art und Weise bestimmt werden. Die Flächenelemente in dem Tonwert des ersten Gebiets 10 können mittels $w_I^{(1)}$ und die Flächenelemente in dem zweiten Tonwert werden mittels $w_{II}^{(1)}$ optimiert werden. Im vorliegenden Fall entsprich der Optimierung einer Maximierung des Wertes der Zielfunktion, d.h. der Graphen $w_I^{(1)}$ und $w_{II}^{(1)}$, die wie folgt gewählt werden können. Der erste Graph der Zielfunktion $w_I^{(1)}$ kann beispielsweise durch jenen Anteil der Fläche des Flächenelementes gebildet werden, der in dem ersten Gebiet 10 liegt. Der zweite Graph $w_{II}^{(1)}$ kann dementsprechend durch jenen Anteil der Fläche des Flächenelements $S_a$ gebildet werden, der in dem zweiten Gebiet 20 sich befindet. Konkret bedeutet dies, dass der erste Graph für Flächenelemente in dem ersten Farbton maximal ist für die Flächenelemente $S_1$, $S_2$, ..., $S_{k(i)}$. Bei einem weiteren Anstieg des Durchmessers D überlappt ein Teil der Fläche der Flächenelemente mit dem zweiten Abschnitt 20, so dass der relative Anteil der Fläche, die in dem ersten Gebiet 10 liegt, mit zunehmendem Durchmesser abnimmt. Bei dem maximalen Durchmesser $D_{max}$ wird ein Minimalwert von $w_I^{(1)}$ erreicht.

Komplementär dazu verhält sich der zweite Graph, der von dem Flächenanteil abhängt, der innerhalb des zweiten Gebiets 20 liegt, so dass für alle Strukturelemente mit $D < D_{k(i)}$, die also keine Überlappung mit dem zweiten Gebiet 20 aufweisen, der zweite Graph minimal ist und für einen Durchmesser $D > D_{k(i)}$ der zweite Graph kontinuierlich ansteigt, bis ein Maximalwert für den Durchmesser $D = D_{max}$ erreicht wird. Für das Beispiel in Fig. 4B zeigt sich nun, dass der Maximalwert des zweiten Graphen $w_{II}^{(1)}$ unterhalb des Maximalwerts der ersten Graphen $w_I^{(1)}$ liegt und somit das optimale Flächenelement $S_{k(i)}$ in dem hier beschriebenen Beispiel schwarz ist. Dies bedeutet, dass die modifizierte Maske dadurch gebildet wird, dass das optimale Flächenelement $S_{k(i)}$ zu dem Maskenbild 110 hinzuzufügen ist (wie in Fig. 3C, D gezeigt), wodurch sich die modifizierte Randkurve 130' sich der Konturkurve 30 annähert.

Die Wahl der Zielfunktion ist nicht eindeutig kann modifiziert werden. Beispielsweise kann w einen anderen funktionalen Zusammenhang von den Variablen (hier den Durchmesser D) aufweisen oder w kann durch Hinzufügen weiterer Terme verändert werden, wie in Glg. (1) beschrieben. Entsprechend von Ausführungsbeispielen ist die Zielfunktion jedoch der Art, dass die Optimierung oder Maximierung der Zielfunktion dazu führt, dass das optimierte Flächenelement $S_{k(i)}$ einen gleichen oder äquivalenten Tonwert aufweist wie das darunter liegende Gebiet des digitalen Bildes oder des Kamerabildes.

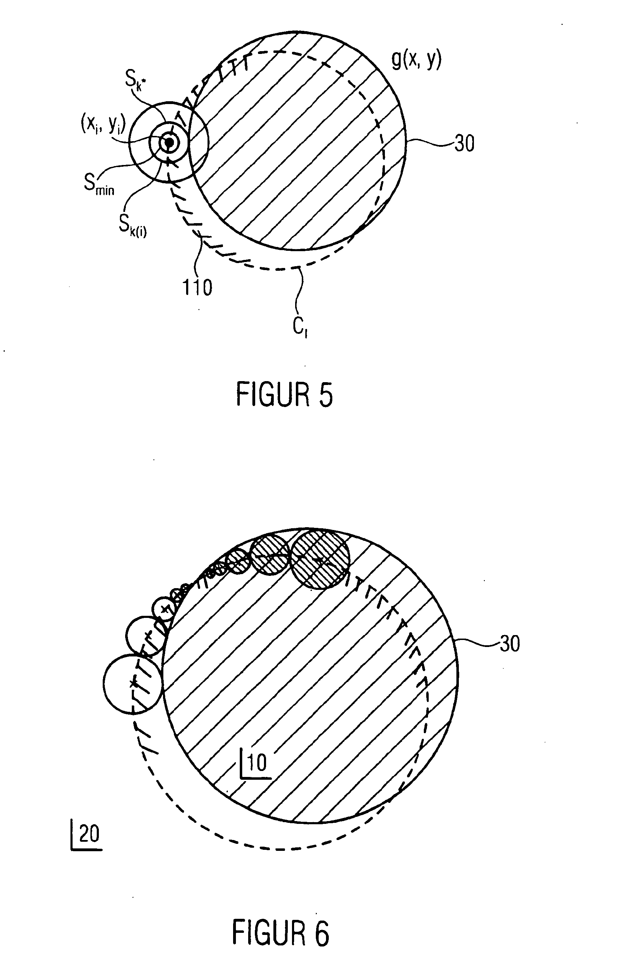

Fig. 5 zeigt die Berechnung der Korrelation $r_{ik}$ der strukturierenden Elemente $S_a$ mit dem Binärbild g(x,y) an jedem Konturpunkt $(x_i, y_i)$. Es ist eine Kontur $c_1$ (=Berandungskurve 130) eines Maskenbildes gezeigt, die eine kreisförmige Form aufweist und ferner von der Konturkurve 30 des Bildes g(x,y) (z. B. binäres Bild) abweicht. Für die Konturkurve $c_1$ wird nun die zuvor beschriebene Optimierungsaufgabe, d. h. die Bestimmung optimierter Flächenelemente $S_a$ nacheinander für eine Serie von Randpunkten ausgeführt, bis die Konturkurve $c_1$ zumindest einmal durchlaufen ist. Die Anzahl der Randpunkte $N_1$ mit den Koordinaten $(x_i, y_i)$ kann derart gewählt werden, dass der Abstand zweier benachbarter Randpunkte kleiner ist als der minimale Durchmesser $D_{min}$ der Flächenelemente $S_a$, die in diesem Beispiel wieder als Kreise gewählt wurde. Die Wahl der Anzahl der Randpunkte bzw. der Abstand benachbarter Bildpunkte kann nun dahin gehend optimiert werden, dass zum einen eine möglichst geringe Zahl gewählt wird, so dass der Rechenaufwand minimiert wird, zum anderen jedoch hoch gewählt wird, so dass das modifizierte Maskenbild eine möglichst gleichförmige gestaltete modifizierte Randkurve 130' aufweist. Wie in Fig. 5 ist die so durchzuführende Optimierung dadurch gekennzeichnet, dass nacheinander Flächenelemente $S_a$ an dem Randpunkt $(x_i, y_i)$ angeordnet werden, beginnend mit einem kleinsten Flächenelement $S_{min}$ und daran anschließend weitere Flächenelemente mit variablem Durchmesser bis hin zu einem maximalen Flächenelement $S_{max}$, das eine maximale Fläche aufweist. Die Optimierung kann selbstverständlich in umgekehrter (oder andere) Reihenfolge erfolgen, d. h. beginnend mit einem Flächenelement maximaler Fläche folgend von Flächenelementen mit sukzessiv kleiner werdenden Flächeninhalten. Als Ergebnis wird

ein optimiertes Flächenelement $S_{k(i)}$ erhalten, das, wie zuvor beschrieben, dadurch gekennzeichnet ist, dass es eine maximale Fläche aufweist ohne jedoch die Berandungskurve 30 zu schneiden. Das optimierte Flächenelement $S_{k(i)}$ ist bei der Optimierungsaufgabe als eine Zielvorgabe anzusehen, so dass eine konkret gewählte Implementierung der Optimierung sich dem Ziel annähert ohne es notwendigerweise zu erreichen.

Die beschriebene Prozedur kann auch mehrfach durchlaufen werden, so dass somit eine sukzessive Annäherung möglich wird. In diesem Fall wird beim ersten Durchgang noch nicht das optimale Flächenelement ermittelt.

Fig. 6 zeigt das Ergebnis der derart ausgeführten Optimierung, so dass eine Serie i = 1, 2, 3, ... von optimierten Flächenelementen $S_{k(i)}$ sich für jeden Randpunkt $(x_i, y_i)$ ergibt. Der Tonwert der optimierten Flächenelemente $S_{k(i)}$ entspricht dabei dem Tonwert des jeweiligen Gebiets des binären Bildes. Wenn z.B. das optimierte Strukturelement $S_{k(i)}$ ein Bereich des ersten Gebiets 10 mit dem ersten Tonwert (z.B. schwarz) abdeckt, dann hat das optimierte Flächenelement $S_{k(i)}$ ebenfalls den ersten Tonwert (schwarz) und andererseits, wenn das optimierte Flächenelement $S_{k(i)}$ einen Teil des zweiten Gebiets 20 den zweiten Tonwert (weiß) einnimmt, dann hat das optimierte Strukturelement $S_{k(i)}$ ebenfalls den zweiten Tonwert (weiß). Durch das zuvor beschriebene Hinzunehmen oder Heraustrennen der optimierten Flächenelemente $S_{k(i)}$ wird ein modifiziertes Maskenbild erzeugt, dessen neue Berandungskurve 110' sich der Konturkurve 30 annähert. Die in der Fig. 6 gewählten Abstände zwischen benachbarten Strukturelementen stellen den maximal zu wählenden Abstand dar, wobei eine Verringerung der Abstände wie oben beschrieben dahingehend vorteilhaft ist, da die dann resultierende modifizierte Berandungskurve der modifizierten Maske eine verbesserte Glattheit aufweist.

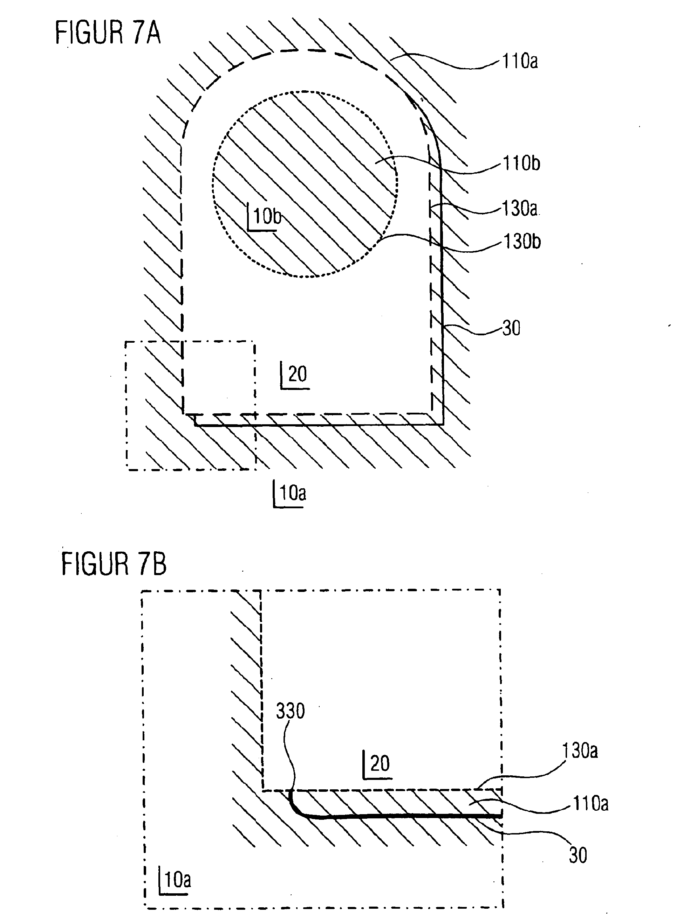

Die Fig. 7A und 7B zeigen ein Beispiel einen Prüfbereich einer Gussfläche, wobei der Prüfbereich durch die Maske mit dem Maskenbereich 110 definiert wird. Fig. 7A zeigt ein Maskenbild mit einer ersten Berandungskurve 130a und einer zweiten Berandungskurve 130b, wobei die zweite Berandungskurve 130b innerhalb der ersten Berandungskurve 130a liegt. Die Maske ist durch einen Maskenbereich 110 gegeben, der ebenfalls einen ersten Maskenbereich 110a und einen zweiten Maskenbereich 110b aufweist, welche durch die erste Berandungskurve 130a und die zweite Berandungskurve 130b begrenzt sind. Ferner zeigt die Fig. 7A, dass die Maske einen Prüfbereich innerhalb eines Bildes kennzeichnet, wobei das Bild eine Konturkurve 30 aufweist, die ein erstes Gebiet 10 (mit einem erste Teil 10a und einem zweiten Teil 10b) von einem zweiten Gebiet 20 trennt. Die Konturkurve 30 ist in der Fig. 7A nicht vollständig gezeigt, sondern nur an jenen Stellen, wo der erste Maskenbereich 110a in den zweiten Bereich 20 des digitalen Bildes hinein ragt. Ein Ziel des Optimierungsverfahrens gemäß Ausführungsbeispielen der vorliegenden Erfindung ist es nun, den Maskenbereich bzw. genauer den ersten Maskenbereich 110a derart zu ändern, dass die erste Randkurve 130a derart verschoben wird, dass sie vollständig innerhalb der Konturkurve 30 erscheint. Dies bedeutet insbesondere, dass auf dem linken Bildrand der Fg. 7A die erste Randkurve 130a zu verändern ist, sodass die Konturkurve 30 auch dort sichtbar wird. Damit kann dann sichergestellt werden, dass das Maskenbild und.insbesondere das erste Maskengebiet 110a die Konturkurve 30 abdeckt, um dadurch eventuell auftretende Artefakte bei einer automatisierten Bildauswertung zu vermeiden.

Fig. 7B zeigt eine vergrößerte Darstellung eines unten links gezeigten Abschnitts in der Fig. 7A. Es ist deutlich sichtbar, dass die Konturkurve 30 in der Nähe des Punktes 330 die Berandungskurve 130a schneidet. Ziel der Optimierung ist es nun, dass die Konturkurve 30 die erste Randkurve 130a nicht schneidet, so dass die Konturkurve 30 innerhalb des Maskengebietes 110a verläuft.

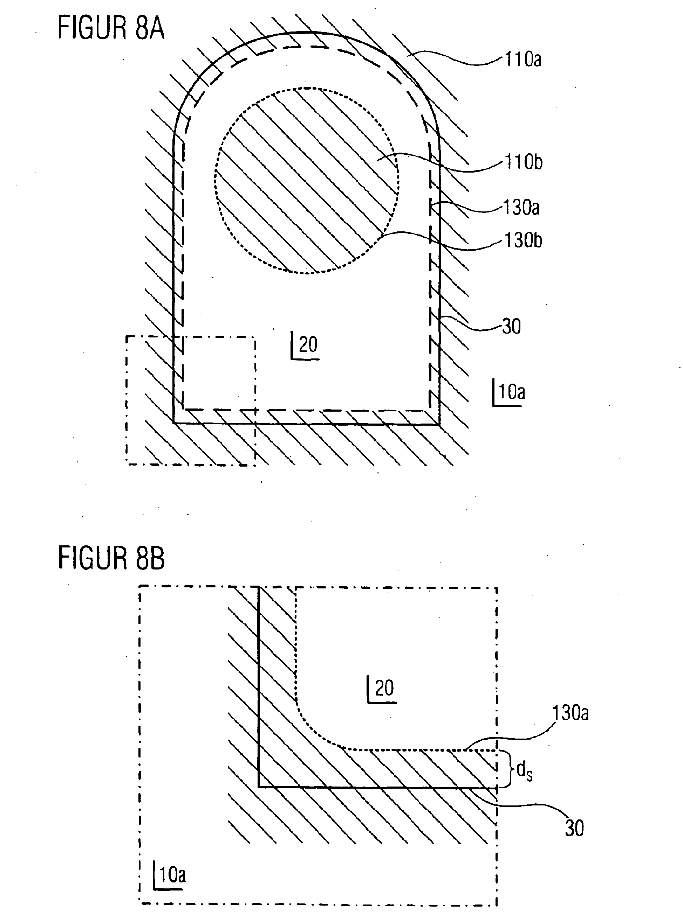

Die Fig. 8A und 8B zeigen das Ergebnis der Optimierung gemäß Ausführungsbeispielen. Fig. 8A zeigt wiederum eine vollständige Ansicht des zu prüfenden Ausschnitts, der dem zweiten Gebiet 20 entspricht und der durch das erste Maskengebiet 110a und das zweite Maskengebiet 110b begrenzt wird. Die Konturkurve 30, die das erste Gebiet 10 von dem zweiten Gebiet 20 trennt, ist bei dem in Fig. 8 gezeigten Beispiel von dem ersten Maskengebiet 110a bedeckt, oder anders ausgedrückt die erste Randkurve 130a liegt vollständig innerhalb der Konturkurve 30. Fig. 8B zeigt einen entsprechend vergrößerten Ausschnitt, der wiederum von der linken unteren Abschnitt der in Fig. 8A gezeigten Figur genommen wurde. Dabei ist klar ersichtlich, dass jetzt die Konturkurve 30 nicht mehr die erste Randkurve 130a schneidet und gleichzeitig einen minimalen Sicherheitsabstand bildet $d_s$.

Das hier vorgestellte Verfahren bietet somit einen Ansatz, um vordefinierte Masken einer bestimmten Form in einstellbare Grenzen an das jeweils vorliegende Bauteil anzupassen. Fig. 7A zeigt einen manuell vordefinierten Prüfbereich (nicht schraffiert), der über ein Bauteil gelegt wurde, das vom Muster abweicht (siehe Detailausschnitt in Fig. 7B). Dieser Prüfbereich wurde durch das beschriebene Verfahren, wie in Fig. 8A und 8B gezeigt (unschraffierter Bereich), an das Bauelemente angepasst. Dabei kann beispielsweise ein zusätzlicher Sicherheitsabstand zum Rand eingestellt werden, der in Fig. 8B mit $d_s$ gekennzeichnet ist. Im Detail zeigt Fig. 7A beispielsweise einen Prüfbereich auf einer bearbeiteten Gussfläche mit einem vordefinierten Bereich, der in Fig. 8A nach automatischer Anpassung gezeigt ist. Der vordefinierte Bereich überschreitet in der Detailansicht von Fig. 7B den Rand der Prüffläche, was zur Feststellung oder Detektion von Pseudo-Fehlern führen kann. In Fig. 8B ist die Vorgabekontur richtig mit einem Sicherheitsabstand $d_s$ zum Rand angepasst. Der Sicherheitsabstand kann beispielsweise manuell oder durch morphologische Operationen angepasst werden, um ein optimales Ergebnis (durch Sichtprüfung z.B.) zu erhalten.

Bei weiteren Ausführungsbeispielen umfassen Bauteile mehr als zwei (im Prinzip beliebig viele) Berandungs- oder Konturkurven.

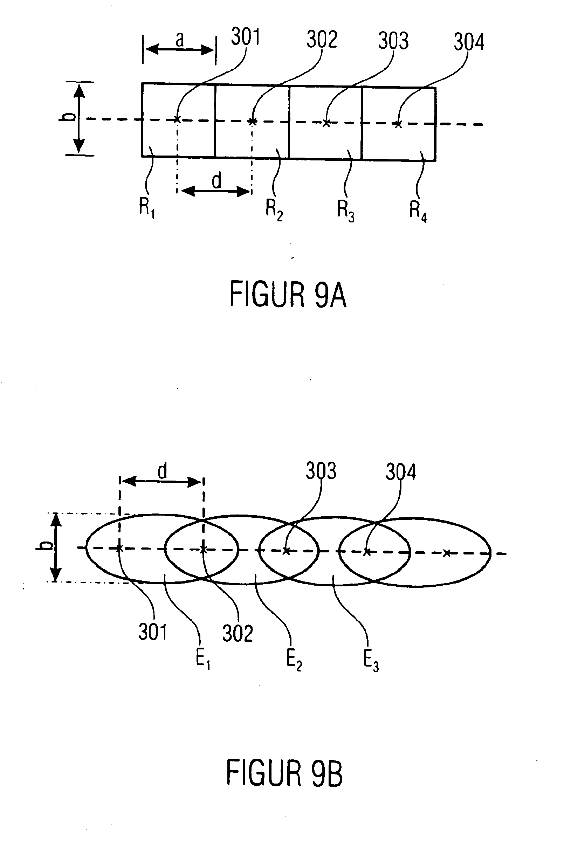

Fig. 9 zeigt weitere Ausführungsbeispiele der vorliegenden Erfindung, bei denen als Flächenelemente Vierecke oder Ellipsen verwendet werden. Fig. 9a zeigt eine Serie von Rechtecken $R_1$, $R_2$, $R_3$, $R_4$, ..., die um Randpunkte 301, 302., 303, 304, ... zentriert sind, wobei die erste Seitenflächen a der Rechtecke $R_1$ derart gewählt sind, dass sie zumindest dem Abstand zweier benachbarter Randpunkte entspricht und die andere Seitenfläche b im Rahmen der zuvor beschriebenen Optimierung variiert wird, d. h. die Seitenfläche b entspricht den variablen Durchmessern $D_k$ der zuvor gewählten Kreise. Die Rechtecke können entweder alle eine gleiche erste Seitenfläche a aufweisen oder aber die Seitenfläche kann (in Abhängigkeit der zweiten Seitenfläche b) ebenfalls dynamisch gewählt werden. Dies kann, aber braucht nicht, in Verbindung mit einer Wahl der Randpunkte 301, 302, 303, 304, ... geschehen. Fig. 9b zeigt ein weiteres Ausführungsbeispiel, bei dem als Flächenelemente Ellipsen gewählt wurden und zwar derart, dass benachbarte Randpunkte 301 und 302 sich jeweils in den beiden Brennpunkten der entsprechenden Ellipse befinden. Somit ist durch eine Wahl des Abstands benachbarter Randpunkte 301 und 302 bereits der Abstand der Brennpunkte bereits festgelegt, und der Wert der Nebenachse b wird im Rahmen der zuvor beschriebenen Optimierung entsprechend verändert, so dass optimierte Flächenelemente in Form von Ellipsen $E_{k(i)}$ sich ergeben.

Ein Vorteil der Verwendung von Rechtecken wie in Fig. 9a oder die Verwendung von Ellipsen, wie in Fig. 9b gezeigt, besteht darin, dass der Abstand benachbarter Randpunkte d entsprechend größer gewählt werden kann. Da die Form der Flächenelemente von d abhängt (bei den Rechtecken die erste Seitenfläche a und bei den Ellipsen der Abstand der beiden Brennpunkte), ändert ist automatisch sichergestellt, dass eine resultierende modifizierte Randkurve 110' eine größere Glattheit aufweist als dies bei der Verwendung von Kreisen der Fall ist. Dies kann zu einer Verringerung des Rechenaufwandes führen.

Bei dem erfindungsgemäßen Verfahren kann ferner entlang der Berandungskurve 130 eine Serie von Randpunkte gewählt werden und für jeden der gewählten Randpunkte können die erfindungsgemäßen Verfahrensschritte nacheinander ausgeführt werden. Außerdem können bei weiteren Ausführungsbeispielen die Verfahrensschritte gleichzeitig für alle Randpunkte in der Serie der Randpunkte ausgeführt werden.

Bei weiteren Ausführungsbeispielen weisen die vorgegebenen Flächenelemente $S_a$ einen Umfang auf, der größer als ein Minimalumfang U ist, und benachbarte Randpunkte weisen einen Abstand auf, der kleiner als ein Maximalabstand ist, wobei die erfindungsgemäßen Verfahrensschritte derart ausgeführt werden, dass der Maximalabstand kleiner ist als U/3. Außerdem kann der Schritt des Erzeugens des binären Bildes gemäß weiteren Ausführungsbeispielen eine Verwendung eines Schwellwertverfahrens umfassen.

Bei weiteren Ausführungsbeispiele wird der erfindungsgemäße Schritt des Bestimmens eines Flächenelements derart ausgeführt, dass der erste Zusatzterm zur Zielfunktion und der zweite Zusatzterm zur Zielfunktion mit Gewichte versehen sind, so dass das adaptierte Maskenbild eine Berandungskurve 130' aufweist und alle Punkte der Berandungskurve 130' höchstens um einen vorbestimmten Abstand von der Konturkurve 30 entfernt sind. Bei dem erfindungsgemäßen Verfahren kann ferner der Schritt des Bestimmens eines Flächenelements derart ausgeführt werden, dass als vorbestimmte Flächenelemente $S_a$ Kreise oder Vielecke verwendet werden, oder es werden Ellipsen verwendet, wobei benachbarte Randpunkte in Brennpunkten der Ellipsen angeordnet werden.

Bei weiteren Ausführungsbeispielen weist das erfindungsgemäße Verfahren einen Schritt des Skalierens auf, das auf unterschiedliche Abschnitte der Berandungskurve 130 unterschiedlich angewendet wird.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

**Patentansprüche**

1. Verfahren zum Adaptieren eines Maskenbildes an ein digitales Bild, wobei das Maskenbild ein Maskengebiet (110) aufweist, das durch eine Berandungskurve (130) begrenzt ist, und das digitale Bild ein erstes Gebiet (10) mit einem ersten Tonwerttyp und ein zweites Gebiet (20) mit einem zweiten Tonwerttyp aufweist, und wobei das Maskenbild dem digitalen Bild überlagert ist und die Berandungskurve (130) entlang einer Konturkurve (30) verlaufen soll, die das erste Gebiet (10) von dem zweiten Gebiet (20) trennt, mit folgenden Schritten:

   (a) Wählen eines Randpunktes (300) auf der Berandungskurve (130) der Maske;
   (b) Bestimmen eines unter einer Mehrzahl von vorgegebenen Flächenelementen ($S_a$) des ersten Tonwerttyps

und Flächenelementen ($S_a$) des zweiten Tonwerttyps, so dass das bestimmte Flächenelement $S_{k(i)}$ unter Platzierung desselben an einem Ort des Randpunktes (300) eine Zielfunktion extremal macht, wobei die Zielfunktion von demjenigen Flächenanteil des jeweiligen Flächenelementes unter Platzierung desselben an dem Ort des Randpunkts (300) abhängt, der mit dem ersten Gebiet (10) überlappt, falls das jeweilige Flächenelement vom ersten Tonwerttyp ist, und von demjenigen Flächenanteil des jeweiligen Flächenelementes unter Platzierung desselben an dem Ort des Randpunkts (300) abhängt, der mit dem zweiten Gebiet überlappt, falls das jeweilige Flächenelement vom zweiten Tonwerttyp ist; und

(c) Vergrößern oder Verkleinern des Maskengebietes (110) um das bestimmte Flächenelement ($S_{k(i)}$) abhängig von dem Tonwerttyp des bestimmten Flächenelements ($S_{k(i)}$), um ein adaptiertes Maskenbild zu erhalten.

2. Verfahren nach Anspruch 1, bei dem der Schritt (c) derart ausgeführt wird, dass das Maskengebiet (110) vergrößert wird, sofern das bestimmte Flächenelement ($S_{k(i)}$) den ersten Tonwerttyp aufweist und das Maskengebiet (110) verkleinert wird, sofern das bestimmte Flächenelement ($S_{k(i)}$) den zweiten Tonwerttyp aufweist.

3. Verfahren nach Anspruch 1 oder Anspruch 2, bei dem die Schritte (a) bis (c) für einen weiteren Randpunkt wiederholt werden.

4. Verfahren nach einem der vorhergehenden Ansprüche, bei dem das Maskenbild eine erste und zweite Berandungskurve (130a, 130b) aufweist, und bei dem die Schritte (a) bis (c) für Randpunkte auf der ersten und auf der zweiten Berandungskurve (130a, 130b) ausgeführt werden.

5. Verfahren nach einem der vorhergehenden Ansprüche, das ferner einen Schritt eines Erzeugens eines binären Bildes aus dem digitalen Bild aufweist.

6. Verfahren nach Anspruch 5, bei dem der Schritt des Erzeugens eines binären Bildes derart ausgeführt wird, dass das binäre Bild ein Schwarzweiß-Bild aufweist.

7. Verfahren nach einem der vorhergehenden Ansprüche, bei dem die vorgegebenen Flächenelemente ($S_a$) einen diskreten Satz von Flächenelementen mit vorbestimmten Flächen umfassen und der Schritt (b) derart ausgeführt wird, dass nacheinander Werte der Zielfunktion für Flächenelemente des diskreten Satzes bestimmt werden und die Werte der Zielfunktion verglichen werden.

8. Verfahren nach einem der vorhergehenden Ansprüche, bei dem der Schritt (b) derart ausgeführt wird, dass die Zielfunktion einen Zusatzterm aufweist, der von einem Flächeninhalt des jeweiligen Flächenelementes derart abhängt, so dass eine extremale Zielfunktion Flächenelemente mit größerem Flächeninhalt belohnt.

9. Verfahren nach einem der vorhergehenden Ansprüche, bei dem der Schritt (b) derart ausgeführt wird, dass die Zielfunktion einen weiteren Zusatzterm aufweist und der weitere Zusatzterm maximal wird, wenn benachbarte Flächenelemente eine gleiche Größe aufweisen.

10. Verfahren nach einem der vorhergehenden Ansprüche, das ferner einen Schritt eines Begrenzens eines Größenunterschieds benachbarter Flächenelemente aufweist, sodass die in dem Schritt (b) bestimmten Flächenelemente ($S_{k(i)}$) an benachbarten Randpunkten sich höchstens um den vorbestimmten Größenunterschied hinsichtlich ihres Flächeninhaltes unterscheiden.

11. Verfahren nach einem der vorhergehenden Ansprüche, das ferner einen Schritt eines Skalierens des adaptierten Maskenbildes aufweist, so dass das skalierte Maskenbild eine skalierte Berandungskurve aufweist.

12. Verfahren nach Anspruch 11, bei dem der Schritt des Skalierens ein Verkleinern des Maskenbildes aufweist, um einen minimalen Sicherheitsabstand ($d_s$) der skalierten Berandungskurve von der Konturkurve (30) zu erhalten.

13. Verfahren nach Anspruch 11, bei dem der Schritt des Skalierens ein Vergrößern des Maskenbildes umfasst, wobei die skalierte Berandungskurve einen Sicherheitsabstand zur Konturkurve (30)einhält.

14. Vorrichtung zum Adaptieren eines Maskenbildes an ein digitales Bild, wobei das Maskenbild ein Maskengebiet (110) aufweist, das durch eine Berandungskurve (130) begrenzt ist, und das digitale Bild ein erstes Gebiet (10) mit einem ersten Tonwerttyp und ein zweites Gebiet (20) mit einem zweiten Tonwerttyp aufweist, und wobei das Maskenbild dem digitalen Bild überlagert ist und die Berandungskurve (130) entlang einer Konturkurve (30) verlaufen soll, die das erste Gebiet (10) von dem zweiten Gebiet (20) trennt, mit folgenden Merkmalen:

einer Einrichtung zum Wählen eines Randpunktes (300) auf der Berandungskurve (130) der Maske;

einer Einrichtung zum Bestimmen eines unter einer Mehrzahl von vorgegebenen Flächenelementen ($S_a$) des ersten Tonwerttyps und Flächenelemente des zweiten Tonwerttyps, so dass das bestimmte Flächenelement ($S_{k(i)}$) unter Platzierung desselben an einem Ort des Randpunkts (300) eine Zielfunktion extremal macht, wobei die Zielfunktion von demjenigen Flächenanteil des jeweiligen Flächenelements unter Platzierung desselben an dem Ort des Randpunkts (300) abhängt, der mit dem ersten Gebiet (10) überlappt, falls das jeweilige Flächenelement vom ersten Tonwerttyp ist und von demjenigen Flächenanteil des jeweiligen Flächenelements unter Platzierung desselben an dem Ort des Randpunkts (300) abhängt, der mit dem zweiten Gebiet überlappt, falls das jeweilige Flächenelement von dem zweiten Tonwerttyp ist; und

einer Einrichtung zum Vergrößern oder Verkleinern des Maskengebiets (110), um das bestimmte Flächenelement ($S_{k(i)}$) abhängig von dem Tonwerttyp des bestimmten Flächenelementes ($S_{k(i)}$), um ein adaptiertes Maskenbild zu erhalten.

15. Computerprogramm mit einem Programmcode zur Durchführung des Verfahrens nach einem der Ansprüche 1 bis 13, wenn das Computerprogramm auf einem Computer abläuft.

**Claims**

1. Method for adapting a mask image to a digital image, the mask image comprising a mask area (110) bounded by a boundary curve (130), and the digital image comprising a first area (10) having a first tonal value type and a second area (20) having a second tonal value type, and wherein the mask image is overlaid onto the digital image and the boundary curve (130) is to pass along a contour curve (30) separating the first area (10) from the second area (20), comprising the following steps:

(a) selecting a boundary point (300) on the boundary curve (130) of the mask;

(b) determining one of a plurality of predetermined area elements ($S_a$) of the first tonal value type and area elements ($S_a$) of the second tonal value type, so that the determined area element ($S_{k(i)}$), when placing the same to a location of the boundary point (300), makes a target function extremal, wherein the target function depends on the area portion of the respective area element on placing the same to the location of the boundary point (300), which overlaps the first area (10) if the respective area element is of the first tonal value type, and depends on the area portion of the respective area element on placing the same to the location of the boundary point (300), which overlaps the second area if the respective area element is of the second tonal value type; and

(c) increasing or decreasing the mask area (110) around the determined area element ($S_{k(i)}$) depending on the tonal value type of the determined area element ($S_{k(i)}$) to obtain an adapted mask image.

2. Method according to claim 1, wherein step (c) is executed such that the mask area (110) is increased as far as the determined area element ($S_{k(i)}$) comprises the first tonal value type and that the mask area (110) is decreased as far as the determined area element ($S_{k(i)}$) comprises the second tonal value type.

3. Method according to claim 1 or claim 2, wherein steps (a) to (c) are repeated for a further boundary point.

4. Method according to one of the preceding claims, wherein the mask image comprises a first and a second boundary curve (130a, 130b) and wherein the steps (a) to (c) are executed for boundary points on the first and on the second boundary curve (130a, 130b).

5. Method according to one of the preceding claims, further comprising a step of generating a binary image from the digital image.

6. Method according to claim 5, wherein the step of generating a binary image is executed such that the binary image comprises a black and white image.

7. Method according to one of the preceding claims, wherein the predetermined area elements ($S_a$) include a discrete set of area elements having predetermined areas and the step (b) is executed such that one after the other values of the target function are determined for area elements of the discrete set and the values of the target function are compared.

8. Method according to one of the preceding claims, wherein step (b) is executed such that the target function comprises an additional term which depends on an area content of the respective area element such that an extremal target function rewards area elements with a larger area content.

9. Method according to one of the preceding claims, wherein step (b) is executed such that the target function comprises a further additional term and that the further additional term becomes maximal when neighboring area elements have the same size.

10. Method according to one of the preceding claims, further comprising a step of bounding a size difference of neighboring area elements, so that the area elements ($S_{k(i)}$) determined in step (b) are different at neighboring boundary points by no more than the predetermined size difference with respect to their area content.

11. Method according to one of the preceding claims, further comprising a step of scaling the adapted mask image, so that the scaled mask image comprises a scaled boundary curve.

12. Method according to claim 11, wherein the step of scaling comprises decreasing the mask image to obtain a minimal safe distance ($d_s$) of the scaled boundary curve from the contour curve (30).

13. Method according to claim 11, wherein the step of scaling includes increasing the mask image, wherein the scaled boundary curve maintains a safe distance to the contour (30).

14. Device for adapting a mask image to a digital image, the mask image comprising a mask area (110) bounded by a boundary curve (130), and the digital image comprising a first area (10) having a first tonal value type and a second area (20) having a second tonal value type, and wherein the mask image is overlaid onto the digital image and the boundary curve (130) is to pass along a contour curve (30) separating the first area (10) from the second area (20), comprising:

means for selecting a boundary point (300) on the boundary curve (130) of the mask;
means for determining one of a plurality of predetermined area elements ($S_a$) of the first tonal value type and area elements of the second tonal value type, so that the determined area element ($S_{k(i)}$), when placing the same to a location of the boundary point (300), makes a target function extremal, wherein the target function depends on the area portion of the respective area element on placing the same to the location of the boundary point (300), which overlaps the first area (10) if the respective area element is of the first tonal value type, and depends on the area portion of the respective area element on placing the same to the location of the boundary point (300), which overlaps the second area if the respective area element is of the second tonal value type; and means for increasing or decreasing the mask area (110) around the determined area element ($S_{k(i)}$) depending on the tonal value type of the determined area element ($S_{k(i)}$) to obtain an adapted mask image.

15. Computer program having a program code for executing the method according to one of claims 1 to 13, when the computer program is executed on a computer.

**Revendications**

1. Procédé pour adapter une image masque à une image numérique, l'image masque présentant une région de masque (110) limitée par une courbe de bordure (130), et l'image numérique présentant une première région (10) avec un premier type de valeur de tonalité et une deuxième région (20) avec un deuxième type de valeur de tonalité, et l'image masque étant superposée à l'image numérique et la courbe de bordure (130) devant s'étendre le long d'une courbe de contour (30) qui sépare la première région (10) de la deuxième région (20), aux étapes suivantes consistant à:

(a) sélectionner un point de bord (300) sur la courbe de bordure (130) du maque;
(b) déterminer l'un parmi une pluralité d'éléments de surface ($S_a$) du premier type de valeur de tonalité et d'éléments de surface ($S_a$) du deuxième type de valeur de tonalité prédéterminés, de sorte que l'élément de surface déterminé ($S_{k(i)}$) rende, en le plaçant à un endroit du point de bord (300), une fonction cible extrême, la fonction cible étant fonction de la part de surface de l'élément de surface, en plaçant ce dernier à l'endroit du point de bord (300) qui vient en recouvrement avec la première région (10) si l'élément de surface respectif est du premier type de valeur de tonalité, et de la part de surface de l'élément de surface respectif, en plaçant ce dernier à l'endroit du point de bord (300) qui vient en recouvrement avec la deuxième région si l'élément de surface respectif est du deuxième type de valeur de tonalité; et

(c) agrandir ou réduire la zone de masque (110) de l'élément de surface déterminé ($S_{k(i)}$) en fonction du type de valeur de tonalité de l'élément de surface déterminé ($S_{k(i)}$), pour obtenir une image masque adaptée.

2. Procédé selon la revendication 1, dans lequel l'étape (c) est réalisée de sorte que la région de masque (110) soit agrandie, pour autant que l'élément de surface déterminé ($S_{k(i)}$) présente le premier type de valeur de tonalité, et que la région de masque (110) soit réduite, pour autant que l'élément de surface déterminé ($S_{k(i)}$) présente le deuxième type de valeur de tonalité.

3. Procédé selon la revendication 1 ou la revendication 2, dans lequel les étapes (a) à (c) sont répétées pour un autre point de bord.

4. Procédé selon l'une des revendications précédentes, dans lequel l'image masque présente une première et une deuxième courbe de bordure (130a, 130b), et dans lequel les étapes (a) à (c) sont réalisées pour les points de bord sur la première et la deuxième courbe de bordure (130a, 130b).

5. Procédé selon l'une des revendications précédentes, présentant par ailleurs une étape de génération d'une image binaire à partir de l'image numérique.

6. Procédé selon la revendication 5, dans lequel l'étape de génération d'une image binaire est réalisée de sorte que l'image binaire présente une image en noir et blanc.

7. Procédé selon l'une des revendications précédentes, dans lequel les éléments de surface prédéterminés ($S_a$) comprennent un ensemble discret d'éléments de surface à surfaces prédéterminées et l'étape (b) est réalisée de sorte que les valeurs de la fonction cible sont déterminées successivement pour les éléments de surface de l'ensemble discret et les valeurs de la fonction cible sont comparées.

8. Procédé selon l'une des revendications précédentes, dans lequel l'étape (b) est réalisée de sorte que la fonction cible présente un terme additionnel qui est fonction d'un contenu de surface de l'élément de surface respectif de sorte qu'une fonction extrême avantage les éléments de surface à grand contenu de surface.

9. Procédé selon l'une des revendications précédentes, dans lequel l'étape (b) est réalisée de sorte que la fonction cible présente un autre terme additionnel et que l'autre terme additionnel devienne maximal lorsque des éléments de surface voisins présentent une même grandeur.

10. Procédé selon l'une des revendications précédentes, présentant par ailleurs une étape de limitation d'une différence de grandeur entre éléments de surface voisins, de sorte que les éléments de surface ($S_{k(i)}$) déterminés à l'étape (b) diffèrent à des points de bord voisins de tout au plus de la différence de grandeur prédéterminée en ce qui concerne leur contenu de surface.

11. Procédé selon l'une des revendications précédentes, présentant par ailleurs une étape d'échelonnement de l'image masque adaptée, de sorte que l'image masque présente une courbe de bordure échelonnée.

12. Procédé selon la revendication 11, dans lequel l'étape d'échelonnement présente une réduction de l'image masque, pour obtenir une distance de sécurité minimale ($d_s$) entre la courbe de bordure échelonnée et la courbe de contour (30).

13. Procédé selon la revendication 11, dans lequel l'étape d'échelonnement comprend un agrandissement de l'image masque, la courbe de bordure échelonnée respectant une distance de sécurité par rapport à la courbe de contour (30).

14. Dispositif pour adapter une image masque à une image numérique, l'image masque présentant une région de masque (110) limitée par une courbe de bordure (130), et l'image numérique présentant une première région (10) avec un premier type de valeur de tonalité et une deuxième région (20) avec un deuxième type de valeur de tonalité, et l'image masque étant superposée à l'image numérique et la courbe de bordure (130) devant s'étendre le long d'une courbe de contour (30) qui sépare la première région (10) de la deuxième région (20), aux caractéristiques suivantes:

un moyen destiné à sélectionner un point de bord (300) sur la courbe de bordure (130) du maque;

un moyen destiné à déterminer l'un parmi une pluralité d'éléments de surface ($S_a$) du premier type de valeur de tonalité et d'éléments de surface du deuxième type de valeur de tonalité prédéterminés, de sorte que l'élément de surface déterminé ($S_{k(i)}$) rende, en le plaçant à un endroit du point de bord (300), une fonction cible extrême, la fonction cible étant fonction de la part de surface de l'élément de surface, en plaçant ce dernier à l'endroit du point de bord (300) qui vient en recouvrement avec la première région (10) si l'élément de surface respectif est du premier type de valeur de tonalité, et de la part de surface de l'élément de surface respectif, en plaçant ce dernier à l'endroit du point de bord (300) qui vient en recouvrement avec la deuxième région si l'élément de surface respectif est du deuxième type de valeur de tonalité; et

un moyen destiné à agrandir ou réduire la zone de masque (110) de l'élément de surface déterminé ($S_{k(i)}$) en fonction du type de valeur de tonalité de l'élément de surface déterminé ($S_{k(i)}$), pour obtenir une image masque adaptée.

**15.** Programme d'ordinateur avec un code de programme pour réaliser le procédé selon l'une des revendications 1 à 13 lorsque le programme d'ordinateur est exécuté sur un ordinateur.

FIGUR 1

FIGUR 2

FIGUR 3A

FIGUR 3B

FIGUR 3C

FIGUR 3D

FIGUR 4A

FIGUR 4B

**FIGUR 5**

**FIGUR 6**

FIGUR 7A

FIGUR 7B

FIGUR 8A

110a

110b

130a

130b

30

20

10a

FIGUR 8B

20

130a

dₛ

30

10a

FIGUR 9A

FIGUR 9B